# EUROPEAN PATENT APPLICATION

(11) **EP 4 583 299 A1**
(43) Date of publication of application: **09.07.2025**
(21) Application number: 23859916.1
(22) Date of filing: 26.07.2023
(51) Int. Cl.: H01M 50/531, H01M 10/04, H01M 10/052, H01M 10/0587

(54) **CYLINDRICAL BATTERY**

(30) Priority: 31.08.2022 JP 2022137891
(71) Applicant: Panasonic Energy Co., Ltd., Osaka 570-8511 (JP)
(72) Inventor: GAMANO, Yusuke, Kadoma-shi, Osaka 571-0057 (JP); MATSUSHITA, Kazuki, Kadoma-shi, Osaka 571-0057 (JP); MORI, Shinya, Kadoma-shi, Osaka 571-0057 (JP)
(74) Representative: Eisenführ Speiser
(86) International application number: PCT/JP2023/027343
(87) International publication number: WO 2024/048147

(57) **Abstract**

An anode lead (20) is bonded between a winding start side end (42a) of an anode mixture layer (42) and a winding finish side end (42b) of the anode mixture layer (42) in an α direction of an electrode (11). When a position opposite to an anode start end is defined as a first position (A) and the center position of a portion opposite to the anode lead (20) is defined as a second position (B) in a cathode mixture layer (52) in a γ direction of a cathode (12), a cathode lead (21) is bonded between the first position (A) and the second position (B) with respect to the γ direction of the cathode (12). A cathode core (51) is made to contact the inner peripheral surface of the outer casing.

## Description

### TECHNICAL FIELD

The present disclosure relates to a cylindrical battery.

### BACKGROUND ART

There is conventionally a cylindrical battery as disclosed in Patent Literature 1. The cylindrical battery comprises an electrode assembly, a cylindrical outer can that houses the electrode assembly, and a sealing assembly that seals the opening of the outer can. A positive electrode of the electrode assembly is electrically connected with the sealing assembly through one positive electrode lead, and a negative electrode of the electrode assembly is electrically connected with a bottom of the outer can through one negative electrode lead.

### CITATION LIST

### PATENT LITERATURE

PATENT LITERATURE 1: Japanese Unexamined Patent Application Publication No. 2013-030494

### SUMMARY

When each of the positive and negative electrodes of the electrode assembly is joined to only one lead, the roundness of the electrode assembly can be enhanced and good battery characteristics can easily be obtained. However, in cylindrical batteries with only one lead provided in each of the positive and negative electrodes, it is a challenge to reduce internal resistance.

Accordingly, it is an object of the present disclosure to provide a cylindrical battery capable of reducing internal resistance in a current collecting structure where each of the positive and negative electrodes has only one lead.

In order to accomplish the above object, a cylindrical battery according to the present disclosure comprises: an electrode assembly formed by winding a long strip-shaped positive electrode and a long strip-shaped negative electrode through a separator, the positive electrode having a positive electrode core and a positive electrode mixture layer, the negative electrode having a negative electrode core and a negative electrode mixture layer; a bottomed cylindrical outer can that houses the electrode assembly; only one positive electrode lead that is joined to the positive electrode and is led from one end portion of both end portions in an axial direction of the electrode assembly; and only one negative electrode lead that is joined to the negative electrode and is led from the other end portion of both the end portions in the axial direction of the electrode assembly, in which the positive electrode lead is joined between a winding start side end of the positive electrode mixture layer and a winding terminal side end of the positive electrode mixture layer in a longitudinal direction of the positive electrode, the negative electrode lead is joined between a first position and a second position in a longitudinal direction of the negative electrode, when the first position is set as a position on the negative electrode mixture layer that faces a positive electrode start end and the second position is set as a center position of a portion that faces the positive electrode lead, and the negative electrode core includes a contact portion that contacts with an inner circumferential surface of the outer can.

The cylindrical battery according to the present disclosure can reduce internal resistance in the current collecting structure having only one lead in each of the positive and negative electrodes.

### BRIEF DESCRIPTION OF DRAWING

FIG. 1 is an axial sectional view of a cylindrical battery according to an embodiment of the present disclosure.
FIG. 2 is a perspective view of an electrode assembly of the cylindrical battery.
FIG. 3(a) is a plan view of a winding inner surface of a positive electrode developed into a long strip shape, FIG. 3(b) is a plan view of a winding outer surface of the positive electrode developed into the long strip shape, FIG. 3(c) is a plan view of a winding inner surface of a negative electrode developed into the long strip shape, and FIG. 3(d) is a plan view of a winding outer surface of the negative electrode developed into the long strip shape.
FIG. 4 is a radial sectional view including part of a negative electrode lead and the electrode assembly.

### DESCRIPTION OF EMBODIMENTS

Hereinafter, an embodiment of a cylindrical battery according to the present disclosure will be described in detail with reference to the drawings. It is assumed from the beginning that a new embodiment is constructed by appropriately combining characteristic portions of the embodiment or modifications as will be described below. In the following embodiment, like components are designated by like reference signs in the drawings to omit redundant explanation. The plurality of drawings are schematic views, and throughout the different drawings, dimensional ratios, such as length, width, and height of each member, do not necessarily match. In this specification, the side of a sealing assembly 17 in an axial direction of a cylindrical battery 10 is defined as "top", and the side of a bottom 68 of an outer can 16 in the axial direction is defined as "bottom".

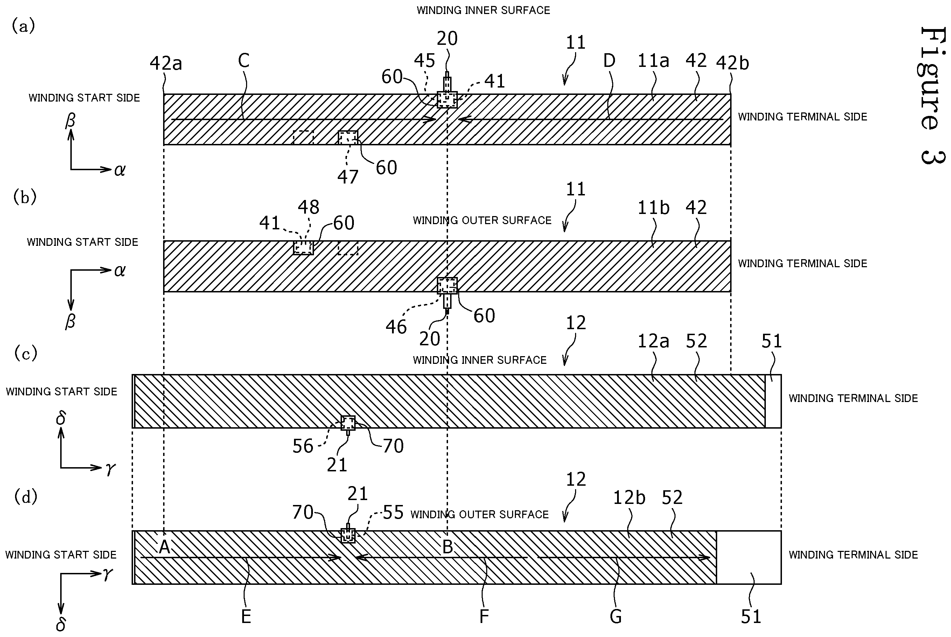

In the plan view of electrodes (positive electrode and negative electrode) in FIGS. 3(a) to 3(d) below, regions shown by slanted lines represent mixture layer forming regions. In the following description, the technical ideas of the present disclosure are described by taking as an example the case where the cylindrical battery is a lithium-ion secondary battery. However, the cylindrical battery of the present disclosure is not limited to the lithium-ion secondary battery and may be a cylindrical battery other than the lithium-ion secondary battery. Moreover, among the components described below, those not included in an independent claim representing the highest-level concept are optional components and are not essential components.

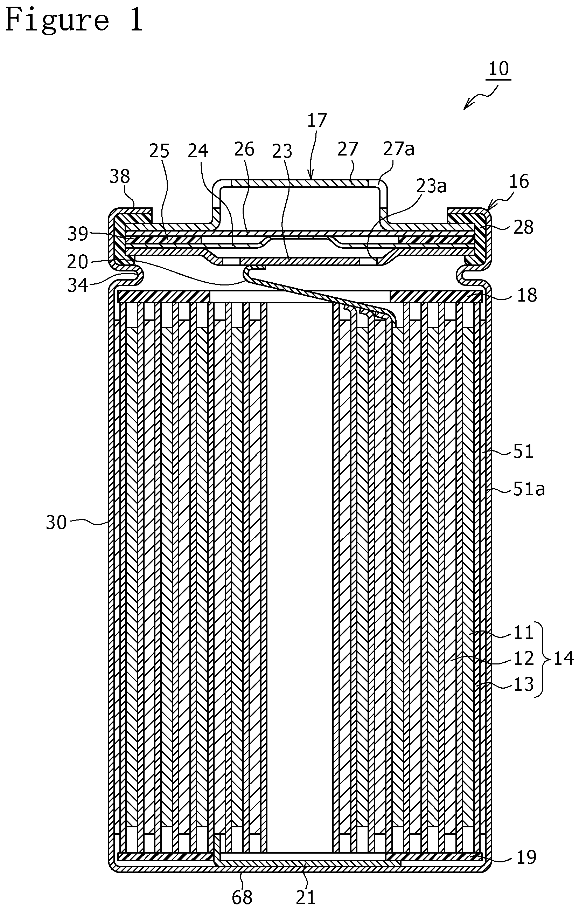

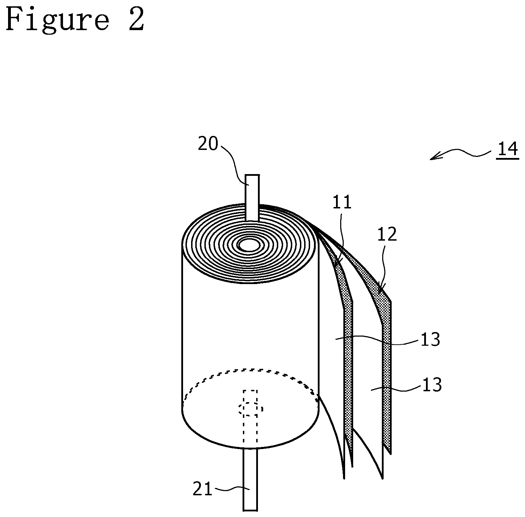

FIG. 1 is an axial sectional view of the cylindrical battery 10 according to an embodiment of the present disclosure, and FIG. 2 is a perspective view of an electrode assembly 14 of the cylindrical battery 10. As shown in FIG. 1, the cylindrical battery (hereinafter simply referred to as the battery) 10 comprises a winding type electrode assembly 14, a non-aqueous electrolyte (not shown), a bottomed cylindrical metallic outer can 16 that houses the electrode assembly 14 and the non-aqueous electrolyte, and the sealing assembly 17 that seals an opening portion of the outer can 16. As shown in FIG. 2, the electrode assembly 14 has a winding structure formed by winding a long strip-shaped positive electrode 11 and a long strip-shaped negative electrode 12 through two long strip-shaped separators 13.

In order to prevent deposition of lithium, the negative electrode 12 is formed with a dimension that is larger than the positive electrode 11. Specifically, the negative electrode 12 is formed to be longer in a longitudinal direction and a width direction (short direction) than the positive electrode 11. The two separators 13 are also formed with dimensions that are at least larger than the positive electrode 11, and are arranged to hold the positive electrode 11 therebetween. The negative electrode 12 may constitute a winding start end of the electrode assembly 14. However, the separators 13 typically extend beyond the winding start side end of the negative electrode 12, and the winding start side ends of the separators 13 constitute the winding start end of the electrode assembly 14.

The non-aqueous electrolyte contains non-aqueous solvent and electrolyte salt solved in the non-aqueous solvent. As the non-aqueous solvent, there may be used esters, ethers, nitriles, amides, and a mixture of two or more of the group consisting of esters, ethers, nitriles, and amides. The non-aqueous solvent may contain halogen substitutions that replace at least some of hydrogen atoms in these solvents with halogen atoms such as fluorine. Note that the non-aqueous electrolyte is not limited to liquid electrolyte, and may be solid electrolyte using gel like polymers or the like. As the electrolyte salt, lithium salt such as LiPF₆ is used.

The positive electrode 11 has a positive electrode core 41 and a positive electrode mixture layer 42 formed on both surfaces of the positive electrode core 41 (see FIGS. 3(a) and 3(b)). As the positive electrode core 41, there may be used a metal foil that is stable in a potential range of the positive electrode 11, such as aluminum and aluminum alloy, a film with the metal arranged on its surface layer, or the like. The positive electrode mixture layer 42 contains a positive electrode active material, a conductive agent, and a binding agent. The positive electrode 11 can be fabricated by, for example, coating the positive electrode core 41 with positive electrode mixture slurry containing a positive electrode active material, a conductive agent, a binding agent, or the like, drying the coating, and then compressing the coating to form a positive electrode mixture layer 42 on both the surfaces of the positive electrode core 41.

The positive electrode active material is constituted with lithium-containing metal composite oxides as a main component. Examples of metal elements contained in the lithium-containing metal composite oxides may include Ni, Co, Mn, Al, B, Mg, Ti, V, Cr, Fe, Cu, Zn, Ga, Sr, Zr, Nb, In, Sn, Ta, and W. Preferable examples of the lithium-containing metal composite oxides are composite oxides containing at least one of the group consisting of Ni, Co, Mn, and Al.

Examples of the conductive agent contained in the positive electrode mixture layer 42 may include carbon materials such as carbon black, acetylene black, ketjen black, graphite, and carbon nanotube. Examples of the binding agent contained in the positive electrode mixture layer 42 may include fluororesin such as polytetrafluoroethylene (PTFE), and polyvinylidene difluoride (PVdF), polyacrylonitrile (PAN), polyimide resin, acrylic resin, and polyolefin resin. These resins may be used in combination with cellulose derivatives such as carboxymethylcellulose (CMC) or its salts, polyethylene oxide (PEO), or the like.

The negative electrode 12 has a negative electrode core 51 and a negative electrode mixture layer 52 formed on both surfaces of the negative electrode core 51 (see FIGS. 3(c) and 3(d)). As the negative electrode core 51, there may be used a metal foil that is stable in a potential range of the negative electrode 12, such as copper and copper alloy, a film with the metal arranged on its surface layer, or the like. The negative electrode mixture layer 52 contains a negative electrode active material and a binding agent. The negative electrode 12 can be fabricated by, for example, coating the negative electrode core 51 with negative electrode mixture slurry containing a negative electrode active material, a binding agent, or the like, drying the coating, and then compressing the coating to form a negative electrode mixture layer 52 on both the surfaces of the negative electrode core 51.

As the negative electrode active material, a carbon material that reversibly absorbs and releases lithium ions is typically used. Preferable carbon materials include natural graphite such as flake graphite, massive graphite, and earthy graphite, and artificial graphite such as massive artificial graphite, and graphitized mesophase carbon microbeads. As negative electrode active material, the negative electrode mixture layer 52 may contain silicon (Si) materials containing Si. As the negative electrode active material, there may be used metal, other than Si, that alloys with lithium, or alloy containing the metal, and compounds containing the metal.

As the binding agent contained in the negative electrode mixture layer 52, there may be used, as in the case of the positive electrode 11, fluororesin, PAN, polyimide resin, acrylic resin, polyolefin resin, or the like, though styrene-butadiene rubber (SBR) or its modification product is preferably used. For example, the negative electrode mixture layer 52 may contain, in addition to SBR or the like, CMC or its salt, polyacrylic acid (PAA) or its salt, polyvinyl alcohol, or the like.

As the separators 13, a porous sheet with ion permeability and insulation properties is used. Specific examples of the porous sheet may include microporous thin films, woven fabrics, and non-woven fabrics. Preferable materials of the separators 13 include polyolefin resin such as polyethylene and polypropylene, and cellulose. The separators 13 may have one of a single-layer structure and a multilayer structure. On the surface of the separators 13, a heat-resistant layer or the like may be formed.

As shown in FIG. 1, the positive electrode 11 is joined to only one positive electrode lead 20, and the negative electrode 12 is joined to only one negative electrode lead 21. Since the electrode assembly 14 is joined to only one positive electrode lead 20 and only one negative electrode lead 21, it is easy to increase the roundness of the electrode assembly 14 and easy to achieve good battery characteristics such as battery life. The battery 10 has an insulating plate 18 above the electrode assembly 14 and an insulating plate 19 below the electrode assembly 14. The positive electrode lead 20, which is led from one end portion (axially upper end portion) of both axial end portions of the electrode assembly 14, extends through a through-hole of the insulating plate 18 toward the sealing assembly 17. The negative electrode lead 21, which is led from the other end portion (axially lower end portion) of both the axial end portions of the electrode assembly 14, extends through a through-hole of the insulating plate 19 toward the bottom 68 of the outer can 16. The positive electrode lead 20 is connected to the lower surface of a sealing plate 23 of the sealing assembly 17 by welding or other processing. A terminal cap 27, which constitutes a top plate of the sealing assembly 17, is electrically connected to the sealing plate 23, so that the terminal cap 27 serves as a positive electrode terminal. The negative electrode lead 21 is connected to an inner surface of the bottom 68 of the metallic outer can 16 by welding or other processing, so that the outer can 16 serves as a negative electrode terminal.

The positive electrode lead 20 is electrically connected to the intermediate part such as a central part of the positive electrode core 41 in a winding direction. As shown in FIG. 1, the negative electrode lead 21 is electrically connected to the intermediate part of the negative electrode core 51 in the winding direction, and an outermost circumference of the electrode assembly 14 is constituted of the negative electrode core 51, so that the negative electrode core 51 on the outermost circumference is brought into contact with an inner circumferential surface of the outer can 16. A joining position of the positive electrode lead 20 in the positive electrode 11, a joining position of the negative electrode lead 21 in the negative electrode 12, and functional effects derived from the joining positions are described in detail using FIGS. 3(a) to 3(d) below.

The battery 10 further comprises a resin gasket 28 arranged between the outer can 16 and the sealing assembly 17. The sealing assembly 17 is fixed to an opening portion of the outer can 16 via the gasket 28 by crimping. As a result, internal space of the battery 10 is sealed. The gasket 28 is held between the outer can 16 and the sealing assembly 17 to insulate the sealing assembly 17 against the outer can 16. The gasket 28 functions as a sealing material to maintain the inside of the battery airtight and also functions as an insulating material to insulate between the outer can 16 and sealing assembly 17.

The outer can 16, which houses the electrode assembly 14 and the non-aqueous electrolyte, has a shoulder portion 38, a grooved portion 34, a cylindrical portion 30, and the bottom 68. The grooved portion 34 can be formed by, for example, recessing part of a side surface of the outer can 16 radially inward in a circular shape by a spinning process performed in a radially inward direction. The shoulder portion 38 is formed by bending an upper end portion of the outer can 16 inward toward a circumferential edge portion 39 of the sealing assembly 17, when the sealing assembly 17 is fixed to the outer can 16 by crimping.

The sealing assembly 17 has a structure formed by stacking the sealing plate 23, a lower vent member 24, an insulating member 25, an upper vent member 26, and the terminal cap 27 in this order from the side of the electrode assembly 14. Each member constituting the sealing assembly 17 has, for example, a disc shape or a ring shape, and each member except the insulating member 25 is electrically connected to each other. The sealing plate 23 has at least one through-hole 23a. The lower vent member 24 and the upper vent member 26 are connected at their center parts with the insulating member 25 being interposed between their respective circumferential edge portions.

When the battery 10 generates abnormal heat and has an increase in internal pressure, the lower vent member 24 deforms so as to push the upper vent member 26 toward the terminal cap 27 and breaks, resulting in interrupting a current path between the lower vent member 24 and the upper vent member 26. As the internal pressure further increases, the upper vent member 26 breaks, so that gas is discharged through the through-hole 27a of the terminal cap 27. Since the gas is discharged, excessive increase in internal pressure of the battery 10 and resultant busting of the battery 10 can be prevented, so that the safety of the battery 10 can be enhanced.

FIG. 3(a) is a plan view of a winding inner surface 11a of the positive electrode 11 developed into a long strip shape, and FIG. 3(b) is a plan view of a winding outer surface 11b of the positive electrode 11 developed into the long strip shape. FIG. 3(c) is a plan view of a winding inner surface 12a of the negative electrode 12 developed into the long strip shape, and FIG. 3(d) is a plan view of a winding outer surface 12b of the negative electrode 12 developed into the long strip shape.

Note that in FIGS. 3(a) and 3(b), a direction α indicates the longitudinal direction of the positive electrode 11 developed into the long strip shape, and a direction β indicates the width direction of the positive electrode 11 developed into the long strip shape. Note that in FIGS. 3(c) and 3(d), a direction γ indicates the longitudinal direction of the negative electrode 12 developed into the long strip shape, and a direction δ indicates the width direction of the negative electrode 12 developed into the long strip shape.

As shown in FIGS. 3(a) and 3(b), the positive electrode 11 has the positive electrode core 41 and the positive electrode mixture layer 42 arranged on the positive electrode core 41. As shown in FIG. 3(a), the winding inner surface 11a of the positive electrode 11 has a first positive electrode core exposed portion 45 in the intermediate part in the direction α of a formation region of the positive electrode mixture layer 42. More specifically, the winding inner surface 11a of the positive electrode 11 has the first positive electrode core exposed portion 45 between a winding start side end 42a of the positive electrode mixture layer 42 and a winding terminal side end 42b of the positive electrode mixture layer 42 in the direction α. As shown in FIG. 3(a) and 3(b), the positive electrode 11 has a second positive electrode core exposed portions 46 at the position on the winding outer surface 11b at the position overlapping the first positive electrode core exposed portion 45 in the thickness direction.

The first positive electrode core exposed portion 45 is a portion where the positive electrode core 41 is exposed, the portion being provided at one side end portion (coinciding with the axially upper end portion) of the positive electrode 11 in the direction β. The first positive electrode core exposed portion 45 is connected to the positive electrode lead 20. The first positive electrode core exposed portion 45 is preferably provided between the position corresponding to 40% to the position corresponding to 60% of the length from a start end to a terminal end of the positive electrode 11 with respect to the direction α with the start end of the positive electrode 11 as a starting point, so that current collecting paths of the positive electrode 11 indicated by arrows C and D in FIG. 3(a) can be effectively shortened, and the internal resistance of the battery 10 can be reduced. The length of the first positive electrode core exposed portion 45 in the direction β is preferably set to be less than or equal to 50% of the length of the positive electrode 11 in the direction β, so that an arrangement region of the positive electrode mixture layer 42 can be enlarged and the capacity can be increased. In addition, the rigidity of the positive electrode 11 can be increased.

As shown in FIGS. 3(a) and 3(b), the negative electrode 12 has the negative electrode core 51 and the negative electrode mixture layer 52 arranged on the negative electrode core 51. As shown in FIG. 3(d), the negative electrode 12 has a first negative electrode core exposed portion 55 positioned between a first position A and a second position B in the direction γ, when the first position A is set as a position on the negative electrode mixture layer 52 that faces the positive electrode start end and the second position B is set as a center position of a portion that faces the positive electrode lead 20. The first negative electrode core exposed portion 55 is provided at one side end portion (coinciding with the axially lower end portion) in the direction δ. The first negative electrode core exposed portion 55 is connected to the negative electrode lead 21.

As shown in FIG. 1, the negative electrode core 51 has a contact portion 51a that contacts the inner circumferential surface of the outer can 16, and a winding terminal side-end portion of the negative electrode 12 in the direction γ is electrically connected to the outer can 16 that constitutes the negative electrode terminal. Therefore, when the negative electrode lead 21 is joined between the first position A and the second position B in the direction γ to bring the joining position of the negative electrode lead 21 more on the inner circumferential side than the joining position of the positive electrode lead in the electrode assembly 14, the distances of three current collecting paths indicated by arrows E, F, and G in FIG. 3(d) can be made closer to equal distances. Therefore, carriers generated in any position on the negative electrode mixture layer 52 in the direction γ can easily be collected using the short current collecting paths. In this way, the internal resistance of the battery 10 can be reduced in the current collecting structure where the positive electrode 11 and negative electrode 12 have only one positive electrode lead 20 and only one negative electrode lead 21, respectively.

Note that the current collecting paths of the negative electrode 11 can be effectively shortened by joining the negative electrode lead 21 at the position that is greater than or equal to 35% and less than or equal to 95% of the length from the first position A to the second position B with respect to the direction γ with the first position A as a starting point. A path difference among the three current collecting paths can be reduced by joining the negative electrode lead 21 at the position that is greater than or equal to 50% and less than or equal to 80% of the length from the first position A to the second position B with respect to the direction γ with the first position A as a starting point. Therefore, carriers generated in any position on the negative electrode mixture layer 52 in the direction γ can be collected using short current collecting paths, and the internal resistance of the battery 10 can further be reduced. When the length of the first negative electrode core exposed portion 55 in the direction δ is set to be less than or equal to 50% of the length of the negative electrode 12 in the direction δ, the arrangement region of the negative electrode mixture layer 52 can be enlarged and the capacity can be increased. In addition, the rigidity of the negative electrode 12 can be increased.

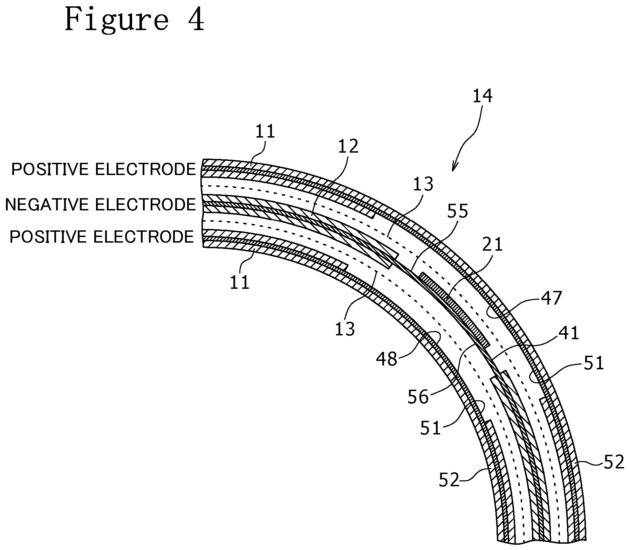

FIG. 4 is a radial sectional view including part of the negative electrode lead 21 and the electrode assembly 14. As shown in FIGS. 3(a) and 4, the positive electrode 11 has a third positive electrode core exposed portion 47 in which the positive electrode core 41 is exposed at the position facing the first negative electrode core exposed portion 55. The third positive electrode core exposed portion 47 is provided at one side end portion (coinciding with the axially lower end portion) in the direction β. When the length of the third positive electrode core exposed portion 47 in the direction β is set to be less than or equal to 50% of the length of the positive electrode 11 in the direction β, the arrangement region of the positive electrode mixture layer 42 can be effectively enlarged and the capacity can be increased. In addition, the rigidity of the positive electrode 11 can be increased.

As shown in FIG. 4, the negative electrode 12 has a second negative electrode core exposed portion 56 at the position on the winding inner surface 12a, the position being overlapped with the first negative electrode core exposed portion 55 in the thickness direction, and the positive electrode 11 has a fourth positive electrode core exposed portion 48 at the position facing the second negative electrode core exposed portion 56. When the length of the fourth positive electrode core exposed portion 48 in the direction β is set to be less than or equal to 50% of the length of the positive electrode 11 in the direction β, the arrangement region of the positive electrode mixture layer 42 can be effectively enlarged and the capacity can be increased. In addition, the rigidity of the positive electrode 11 can be increased. As shown in FIGS. 3(a) to 3(d), in order to prevent short circuits, an insulating tape 60 is attached onto the core exposed portions 45, 46, 47 and 48 of the positive electrode 11, and an insulating tape 70 is attached onto the negative electrode core exposed portions 55 and 56.

### <Cylindrical Battery of Example>

A cylindrical battery of an example was fabricated by joining, in the longitudinal direction of the negative electrode mixture layer, only one negative electrode lead at the position that is 65% of the length from a first position to a second position with respect to the longitudinal direction of the negative electrode with the first position as a starting point, when the first position is set as a position in the longitudinal direction of the negative electrode that faces a positive electrode start end, and the second position is set as a center position of a portion that faces the positive electrode lead. Note that the position of the negative electrode lead was determined based on the center of the negative electrode lead in the longitudinal direction of the negative electrode.

### <Cylindrical Battery of Comparative example>

A cylindrical battery of a comparative example was fabricated in the same way as in the example except that a negative electrode core exposed portion was provided at the winding start-side end portion instead of the intermediate part in the longitudinal direction of the negative electrode and that the negative electrode core exposed portion was joined to only one negative electrode lead.

### [Evaluation of Direct Current Resistance]

Each of the cylindrical batteries of the example and the comparative example were charged to the state of charge (SOC) of 50% and were then discharged for 10 seconds with a constant current of 2450 mA (0.5C). The direct current resistance of each of the cylindrical batteries was calculated based on the amount of a voltage drop value during discharge.

### [Test Result]

**[Table 1]**

| | Negative electrode lead joining position | Direct current resistance |
|---|---|---|
| Comparative example | Winding start-side end portion | 100% |
| Example | Between first position and second position | 95% |

In Table 1, the direct current resistance of the cylindrical battery of the example is shown as a relative value when the direct current resistance of the cylindrical battery of the comparative example is defined as 100%. As shown in Table 1, the direct current resistance of the cylindrical battery of the example could be reduced by 5% as compared with the direct current resistance of the cylindrical battery of the comparative example. Therefore, the cylindrical battery according to the present disclosure can reduce the internal resistance of the battery in the current collecting structure having only one lead in each of the positive and negative electrodes.

Note that the present disclosure is not limited to the embodiment disclosed and modifications thereof, and various modifications and changes are possible without departing from the scope of the claims of the present invention and any equivalents thereof. For example, in the above embodiment, the case where the positive electrode lead 20 is connected to the winding inner surface 11a of the positive electrode 11 has been described, though the positive electrode lead may be connected to the winding outer surface 11b of the positive electrode. Description has also been given of the case where the negative electrode lead 21 is connected to the winding outer surface 12b of the negative electrode 12, though the negative electrode lead may be connected to the winding inner surface 12a of the negative electrode.

Description has also been given of the case where the first and second positive electrode core exposed portions 45 and 46 are provided only on one side end portion of the positive electrode 11 in the direction β. However, at least one of the positive electrode core exposed portion that is joined to the positive electrode lead and the positive electrode core exposed portion that faces the negative electrode core exposed portion joined to the negative electrode lead may be provided over the entire region in a positive electrode width direction. Description has also been given of the case where the first negative electrode core exposed portion 55 that is joined to the negative electrode lead is provided only on one side end portion of the negative electrode 12 in the direction δ. However, the negative electrode core exposed portion that is joined to the negative electrode lead may be provided over the entire region in a negative electrode width direction. In addition, description has been given of the case where the sealing assembly 17 includes the positive electrode terminal and the outer can 16 constitutes the negative electrode terminal, though the sealing assembly may include the negative electrode terminal and the outer can may constitute the positive electrode terminal.

### REFERENCE SIGNS LIST

10 Battery, 11 Positive electrode, 11a Winding inner surface, 11b Winding outer surface, 12 Negative electrode, 12a Winding inner surface, 12b Winding outer surface, 13 Separator, 14 Electrode assembly, 16 Outer can, 17 Sealing assembly, 18, 19 Insulating plate, 20 Positive electrode lead, 21 Negative electrode lead, 23 Sealing plate, 23a Through-hole, 24 Lower vent member, 25 Insulating member, 26 Upper vent member, 27 Terminal cap, 27a Through-hole, 28 Gasket, 30 Cylindrical portion, 34 Grooved portion, 38 Shoulder portion, 39 Circumferential edge portion, 41 Positive electrode core, 42 Positive electrode mixture layer, 42a Winding start side end of positive electrode mixture layer 42, 42b Winding terminal side end of positive electrode mixture layer, 45 First positive electrode core exposed portion, 46 Second positive electrode core exposed portion, 47 Third positive electrode core exposed portions, 48 Fourth positive electrode core exposed portions, 51 Negative electrode core, 51a Contact portion, 52 Negative electrode mixture layer, 55 First negative electrode core exposed portion, 56 Second negative electrode core exposed portion, 60, 70 Insulating tape, 68 Bottom, A First position, B Second position.

## Claims

1. A cylindrical battery, comprising:
an electrode assembly formed by winding a long strip-shaped positive electrode and a long strip-shaped negative electrode through a separator, the positive electrode having a positive electrode core and a positive electrode mixture layer, the negative electrode having a negative electrode core and a negative electrode mixture layer;
a bottomed cylindrical outer can that houses the electrode assembly;
only one positive electrode lead that is joined to the positive electrode and is led from one end portion of both end portions in an axial direction of the electrode assembly; and
only one negative electrode lead that is joined to the negative electrode and is led from another end portion of both the end portions in the axial direction of the electrode assembly, wherein
the positive electrode lead is joined between a winding start side end of the positive electrode mixture layer and a winding terminal side end of the positive electrode mixture layer in a longitudinal direction of the positive electrode,
the negative electrode lead is joined between a first position and a second position in a longitudinal direction of the negative electrode, when the first position is set as a position on the negative electrode mixture layer that faces a positive electrode start end and the second position is set as a center position of a portion that faces the positive electrode lead, and
the negative electrode core includes a contact portion that contacts with an inner circumferential surface of the outer can.

2. The cylindrical battery according to claim 1, wherein
the positive electrode lead is joined at a position that is greater than or equal to 40% and less than or equal to 60% of a length from a start end to a terminal end of the positive electrode with respect to the longitudinal direction of the positive electrode with the start end of the positive electrode as a starting point, and
the negative electrode lead is joined at a position that is greater than or equal to 35% and less than or equal to 95% of a length from the first position to the second position with respect to the longitudinal direction of the negative electrode with the first position as a starting point.

3. The cylindrical battery according to claim 2, wherein
the negative electrode lead is joined at a position that is greater than or equal to 50% and less than or equal to 80% of the length from the first position to the second position with respect to the longitudinal direction of the negative electrode with the first position as a starting point.

4. The cylindrical battery according to any one of claims 1 to 3, wherein
positive electrode core exposed portions in which the positive electrode core is exposed are provided at respective positions on both surfaces of the positive electrode, the positions being overlapped with each other in one side end portion in a width direction of the positive electrode, and one of the positive electrode core exposed portions is joined to the positive electrode lead, and
a length of the positive electrode core exposed portions in the width direction of the positive electrode is less than or equal to 50% of a length in the width direction of the positive electrode.

5. The cylindrical battery according to any one of claims 1 to 3, wherein
negative electrode core exposed portions in which the negative electrode core is exposed are provided at respective positions on both surfaces of the negative electrode, the positions being overlapped with each other in one side end portion in a width direction of the negative electrode, and one of the negative electrode current collector exposed portions is joined to the negative electrode lead, and
a length of the negative electrode core exposed portions in the width direction of the negative electrode is less than or equal to 50% of a length in the width direction of the negative electrode.

6. The cylindrical battery according to any one of claims 1 to 3, wherein
negative electrode core exposed portions in which the negative electrode core is exposed are provided on both surfaces of the negative electrode, and one of the negative electrode current collector exposed portions is joined to the negative electrode lead; and
positive electrode core exposed portions in which the positive electrode core is exposed are provided at respective positions on the positive electrode that face the negative electrode current collector exposed portions.

7. The cylindrical battery according to claim 5, wherein
positive electrode core exposed portions in which the positive electrode core is exposed are provided at respective positions on the positive electrode that face the negative electrode current collector exposed portions,
a length of the positive electrode core exposed portions in a width direction of the positive electrode is less than or equal to 50% of a length in the width direction of the positive electrode.
